# EUROPEAN PATENT APPLICATION

(11) **EP 1 835 735 A1**
(43) Date of publication of application: **19.09.2007**
(21) Application number: 06016899.4
(22) Date of filing: 12.08.2006
(51) Int. Cl.: H04N 5/52, H04B 1/18

(54) **System and method for receiving wireless signals**

(30) Priority: 15.03.2006 CN 200610059198
(71) Applicant: ACER INCORPORATED, Taipei Hsien 221 (TW)
(72) Inventor: Lin, Yung-Sen, 221 Hsichih Taipei Hsien (TW)
(74) Representative: Dreiss, Fuhlendorf, Steimle & Becker

(57) **Abstract**

A system for receiving wireless signals is provided. The system includes an antenna for receiving wireless signals, a preprocessor connected to the antenna, a voltage supply for outputting distinctive DC voltage levels, a connector for providing a DC path and an AC path, a signal-processing module AC-coupled to the preprocessor via the connector, a DC regulator DC-coupled to the voltage supply via the connector, and a signal detector DC-coupled to the voltage supply via the connector, wherein the DC regulator is configured to receive the DC voltage outputted from the voltage supply and provide a first supply voltage to the preprocessor, and the signal detector is configured to detect the DC voltage outputted from the voltage supply and generate a control signal to the preprocessor. The preprocessor selectively adjusts strength of the wireless signals received by the antenna by means of the control signal, and then outputs a data signal which is subsequently transmitted to the signal-processing module via the connector.

## Description

### Field of Invention

The present invention generally relates to a system and a method for receiving wireless signals, and more particularly, to a system and a method for receiving wireless signals by using a single transmission line to transmit wireless signals, generating control signal and providing supply voltage.

### Background of the Invention

The wireless communication system usually includes an antenna configured to receive wireless signals and a signal-processing module configured to process wireless signals. For example, a wireless electronic apparatus configured to receive DVB-T signals needs to equip with an antenna and a DVB-T tuner module.

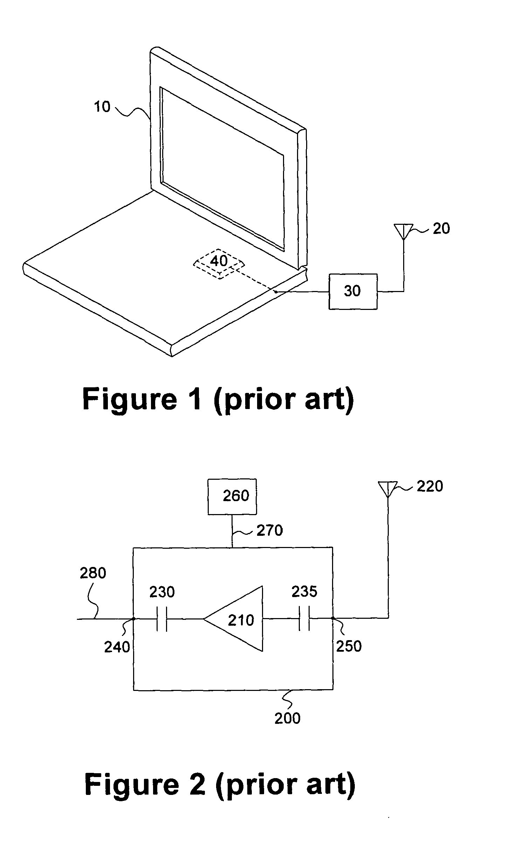

Strength of the signals received by the antenna changes with the position of the wireless electronic apparatus. Therefore, as the wireless electronic apparatus is in an indoor environment or in some critical environments, strength of the received signals may be too weak to be identified by the signal-processing module. Due to this reason, a wireless signal adjusting apparatus is required to amplify strength of the received signals, as shown in Fig. 1. Fig. 1 illustrates a prior art notebook 10 connected to an antenna 20 via a wireless signal adjusting apparatus 30 for receiving wireless signals. Strength of the signals received by the antenna 20 is amplified by the wireless adjusting apparatus 30, and then processed by a wireless signal-processing module 40 built in the notebook 10. However, if the wireless signal adjusting apparatus 30 has a fixed amplification ratio, the amplification ratio will be insufficient in environments with weak signals strength but will be too high in environments with strong signals strength that will cause over-saturated conditions.

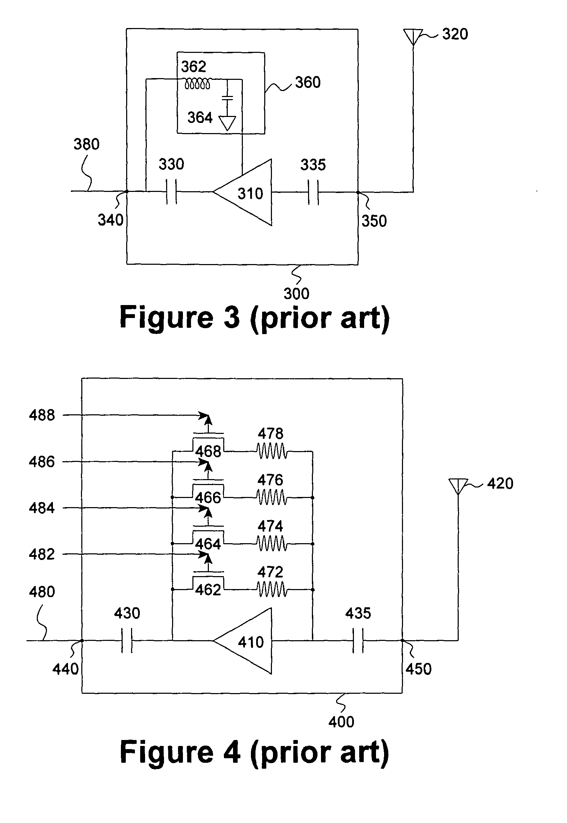

Furthermore, it is also a problem to provide the power supply of the wireless signal adjusting apparatus 30. At present, there are two main architectures to provide power to the wireless signal adjusting apparatus 30: one is to use an independent power line, and the other is to use a wireless signal transmission line, as shown in Figs. 2 and 3 respectively. Fig. 2 illustrates a power architecture for a prior art wireless signal adjusting apparatus, wherein a wireless signal adjusting apparatus 200 includes an input terminal 250 connected to an antenna 220 and an output terminal 240 connected to a signal transmission line 280 for transmitting AC signal to a built-in signal-processing module (not shown). The wireless signal adjusting apparatus 200 includes a low noise amplifier 210 of a fixed gain and high-pass filters, such as a capacitors, 230 and 235, and the power supply 260 connects to the wireless signal adjusting apparatus 200 via a power line 270 for providing the power required by the wireless signal adjusting apparatus 200. In this architecture, the addition of the power line 270 occupies space, causes inconvenience to users, and increases the design complexity to system designers.

Fig. 3 illustrates a power architecture for another prior art wireless signal adjusting apparatus, wherein a wireless signal adjusting apparatus 300 includes an input terminal 350 connected to an antenna 320 and an output terminal 340 connected to a wireless signal transmission line 380 for transmitting AC signal to a built-in signal-processing module (not shown). The wireless signal adjusting apparatus 300 includes a low noise amplifier 310 of a fixed gain and high-pass filters, such as a capacitors, 330 and 335, and the low noise amplifier 310 is DC-coupled to the interior of a system (not shown) via a low-pass filter 360, wherein the DC signal transmitted through the output terminal 340 from the interior of the system acts as the supply voltage to the low noise amplifier 310. As shown in Fig. 3, the low-pass filter 360 can be a simple architecture comprised of an inductor 362 and a capacitor 364. Although the architecture in Fig. 3 doesn't need extra power line, it still requires extra wires to provide control signals for controlling amplification ratio of the wireless signal adjusting apparatus 300.

Fig. 4 illustrates a prior art wireless signal adjusting apparatus 400 with adjustable amplification ratio, including an input terminal 450 connected to an antenna 420 and an output terminal 440 connected to a transmission line 480 for transmitting AC signal to a built-in signal-processing module (not shown). The wireless adjusting apparatus 400 includes a low noise amplifier 410 of a fixed gain and high-pass filters (such as capacitors) 430 and 435. In order to adjust amplification ratio of the wireless adjusting apparatus 400, four resistors 472, 474, 476, 478 and four corresponding switches (such as transistors) 462, 464, 466, and 468 are connected to two terminals of the low noise amplifier 410 in parallel, and the four switches 462, 464, 466, and 468 selectively switch on or switch off the paths of the resistors 472, 474, 476 and 478 respectively, wherein the higher the equivalent resistance of the parallel resistors is, the higher amplification ratio of the wireless signal adjusting apparatus 400 is. In the prior art architecture, four signal lines 482, 484, 486 and 488 are required to transmit control signals, which can be inputted by a user, for controlling the switches 462, 464, 466 and 468 respectively. However, this prior art architecture not only requires additional several signal lines, but also causes some inconveniences during use.

Accordingly, it is advantageous to have a system and a method for receiving wireless signals, which can accomplish the purposes of transmitting wireless signals received by the antenna to the interior of the system, transmitting control signals to control amplification ratio to the wireless signal adjusting apparatus and providing supply voltage to the wireless signal adjusting apparatus.

### Summary of the Invention

To solve the above-mentioned problems, the present invention provides a system and a method for receiving wireless signals. The present invention is capable of transmitting wireless signals, generating control signal and providing supply voltage via a single transmission line.

According to an aspect of the present invention, a system for receiving wireless signals is provided. The system for receiving wireless signals includes: an antenna configured to receive the wireless signals; a preprocessor connected to the antenna; a voltage supply configured to output distinctive DC voltage levels; a connector configured to provide a DC path and an AC path; a signal-processing module AC-coupled to the preprocessor via the connector; a DC regulator DC-coupled to the voltage supply via the connector; and a signal detector DC-coupled to the voltage supply via the connector. The DC regulator configured to receive DC voltages outputted from the voltage supply and to provide a first supply voltage to the preprocessor. The signal detector configured to detect the DC voltages outputted from the voltage supply and to generate a control signal to the preprocessor. The preprocessor selectively adjusts strength of the wireless signals received by the antenna by means of the control signal, and then outputs a data signal which is subsequently transmitted to the signal-processing module via the connector.

According to another aspect of the present invention, a wireless signal adjusting apparatus for adjusting strength of wireless signals received by an antenna is provided. The wireless signal adjusting apparatus is connected to an electronic apparatus via a single transmission line. The wireless signal adjusting apparatus includes a preprocessor and a signal detector. The preprocessor is configured to selectively adjust strength of the wireless signals received by the antenna for outputting a data signal which is subsequently transmitted to the electronic apparatus via the signal transmission line. The signal detector is configured to receive a first control signal outputted from the electronic apparatus and to generate a second control signal, which is then transmitted to the preprocessor, responsive to the first control signal, wherein the electronic apparatus outputs the first control signal according to the data signal. The preprocessor selectively adjusts strength of the wireless signals received by the antenna by means of the second control signal.

According to a further aspect of the present invention, a method for receiving wireless signals is provided. The method comprises: providing an antenna; a voltage supply outputting a DC voltage of a level to a DC regulator; the DC regulator generating a first supply voltage to a processor; the preprocessor receiving and processing the wireless signals received by the antenna for generating a data signal which is subsequently transmitted to a signal-processing module; the signal-processing module selectively changing the DC voltage levels outputted from the voltage supply according to the data signal; and a signal detector generating a control signal to the preprocessor by detecting the DC voltage levels outputted from the voltage supply, wherein the data signal enables the preprocessor to selectively adjust strength of the wireless signals received by the antenna.

The objectives, embodiments, features, and advantages of the invention will be apparent from the following more particular description of preferred embodiments and drawings of the invention.

### Brief Description of the Pictures

The foregoing aspects and many of the attendant advantages of this invention will become more readily appreciated as the same becomes better understood by reference to the following detailed description, when taken in conjunction with the accompanying pictures, wherein:
Figures 1 illustrates a prior art notebook with the function of receiving wireless signals;
Figures 2 illustrates a power architecture for a prior art wireless signal adjusting apparatus;
Figures 3 illustrates a power architecture for another prior art wireless signal adjusting apparatus;
Figure 4 illustrates a prior art wireless signal adjusting apparatus with adjustable amplification ratio;
Figure 5 illustrates a system for receiving wireless signals in accordance with the present invention;
Figure 6 illustrates a system for receiving wireless signals in accordance with an embodiment of the present invention;
Figure 7 illustrates a system for receiving wireless signals in accordance with an embodiment of the present invention; and
Figure 8 illustrates a method for receiving wireless signals in accordance with an embodiment of the present invention.

### Detailed Description of the Invention

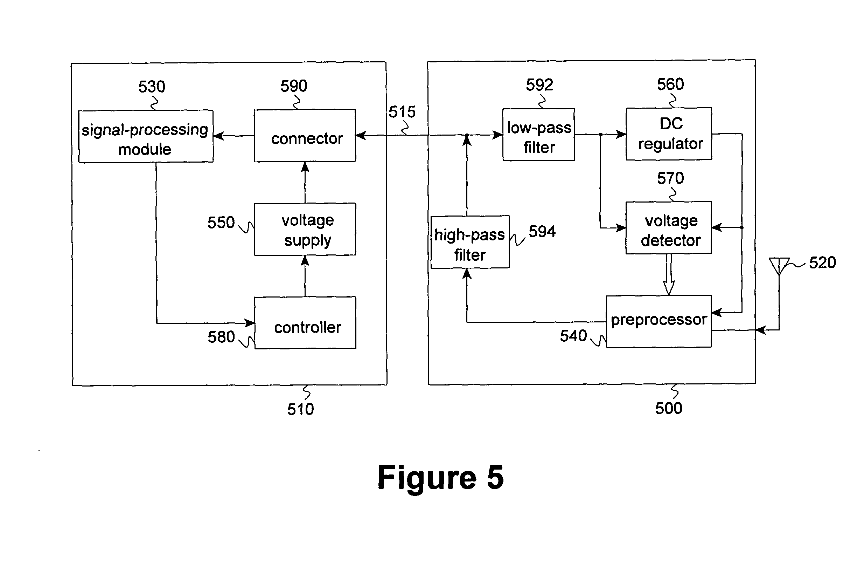

The present invention directs to a system and a method for receiving wireless signals. The present invention will be described more fully hereinafter with reference to the Figs. 5-8. However, the devices, elements and methods in the following description are configured to illustrate the present invention, and should not be construed in a limiting sense.

Fig. 5 illustrates a system for receiving wireless signals in accordance with an embodiment of the present invention, including a wireless signal adjusting apparatus 500, an electronic apparatus 510, a single transmission line 515, and an antenna 520 configured to receive wireless signals. For example, the electronic apparatus 510 can be a notebook, a Personal Digital Assistant (PDA), a 3G mobile phone, a Global Positioning System (GPS), a satellite broadcasting receiver, other mobile deice, or other wireless receiver well known to those skilled in the art. Depending upon the type of application, the antenna 520 can be designed to receive various types of the wireless signals, such as Terrestrial broadcasting signals, satellite signals, microwave signals, or other RF signals. Furthermore, the antenna 520 can be any antenna known to those skilled in the art, including but not limited to omni-directional antenna or directional antenna, single-band, dual-band, or tri-band antennas. The wireless signal adjusting apparatus 500 is positioned between the electronic apparatus 510 and antenna 520 to adjust the wireless signals received by the antenna 520 for outputting a data signal which is subsequently transmitted to the electronic apparatus 510 via the single transmission line 515.

The electronic apparatus 510 includes a signal-processing module 530, a voltage supply 550 and a connector 590. The connector 590 is connected to the single transmission line 515 and is configured to provide an AC path between the single transmission line 515 and the signal-processing module 530 and a DC path between the single transmission line 515 and the voltage supply 550. The signal-processing module 530, which can be a digital television tuner, GPS tuner, satellite radio tuner, etc. depending upon the type of application, is configured to receive and process the signal from the wireless signal adjusting apparatus 500. The electronic apparatus 510 further includes a controller 580 configured to control the DC voltage outputted from the voltage supply 550, and this DC voltage is transmitted to the wireless signal adjusting apparatus 500 via the connector 590 and the single transmission line 515. The controller 580 controls the DC voltage outputted from the voltage supply 550 based on an instruction from the signal-processing module 530, wherein the signal-processing module 530 transmits the instruction to the controller 580 based on the data signal received from the wireless signal adjusting apparatus 500. In another embodiment of the present invention, the signal-processing module 530 can control the DC voltage outputted from the voltage supply 550 directly without employing the controller 580.

The wireless signal adjusting apparatus 500 includes a preprocessor 540, a voltage detector 570 and a DC regulator 560. The DC regulator 560 receives the DC voltage outputted from the voltage supply 550 through a DC path provided by a low-pass filter 592, the single transmission line 515 and the connector 590, and then generates a voltage of a fixed level for use in the preprocessor 540. Namely, the DC regulator 560 provides the supply voltage to the preprocessor 540. For example, the low-pass filter 592 can be a simple inductor or other well-known low-pass filter architecture only allowing the signals with frequencies below a cutoff frequency to pass. The voltage detector 570 detects the DC voltage outputted from the voltage supply 550 through the DC path provided by the low-pass filter 592, the single transmission line 515 and the connector 590, and then generates a different control signal to the preprocessor 540 depending upon the result of detection. The DC regulator 560 can also generate a voltage of another fixed level, which acts as a supply voltage of the voltage detector 570. In another embodiment of the present invention, the required supply voltage of the voltage detector 570 can be identical to the required supply voltage of the preprocessor 540, and therefore the DC regulator 560 only needs to output a single voltage of a fixed level for use in the voltage detector 570 and the preprocessor 540.

The preprocessor 540 is configured to adjust strength of the wireless signals received by the antenna 520, for example, amplifying the wireless signals, or adjusting the direction of the antenna 520 for seeking better signals. The preprocessor 540 generates a data signal by adjusting the wireless signals, and then transmits the generated data signal to the signal-processing module 530 through an AC path provided by a high-pass filter 594, the signal transmission line 515 and the connector 590 for the subsequently process, such as frequency adjustment, signal demodulation, etc. For example, the high-pass filter 594 can be a capacitor or other well-known high-pass filter architecture only allowing the signals with frequencies above a cutoff frequent to pass.

If strength of the data signal received by the signal-processing module 530 is within a desirable range, the DC voltage outputted from the voltage supply 550 can keep in the previous level. However, if strength of the data signal received by the signal-processing module 530 is undesirable, the signal-processing module 510 will change the level of the DC voltage outputted from the voltage supply 550. While the voltage level detected by the voltage detector 570 changes, another corresponding control signal is generated to the preprocessor 540. That is to say, the different voltage levels can be transformed to different corresponding control signals by the voltage detector 570. Under the control of the different control signal, the preprocessor 540 adjusts strength of the wireless signals received by the antenna 520 once again for outputtoing another data signal to the signal-processor module 530. In a word, when strength of the data signal received by the signal-processing module 530 is too large or too small, the output of the voltage supply 550 will change to generate a different control signal for adjusting strength of the data signal outputted by the preprocessor 540.

Through the single transmission line 515, the present invention simultaneously accomplishes the purposes of transmitting wireless signals between the wireless signal adjusting apparatus 500 and the electronic apparatus 510, providing DC voltage to the preprocessor 540 and controlling the output of the preprocessor 540, etc. It should be noted that the configuration of the DC path and the AC path shown in Fig. 5, which is one embodiment of transmission path between the wireless signal adjusting apparatus 500 and the electronic apparatus 510, is not intended to limit the present invention. Additional applications of the transmission path will be apparent to persons skilled in the relevant art(s) based on the teachings contained herein, such as using two connectors in the electronic apparatus 510.

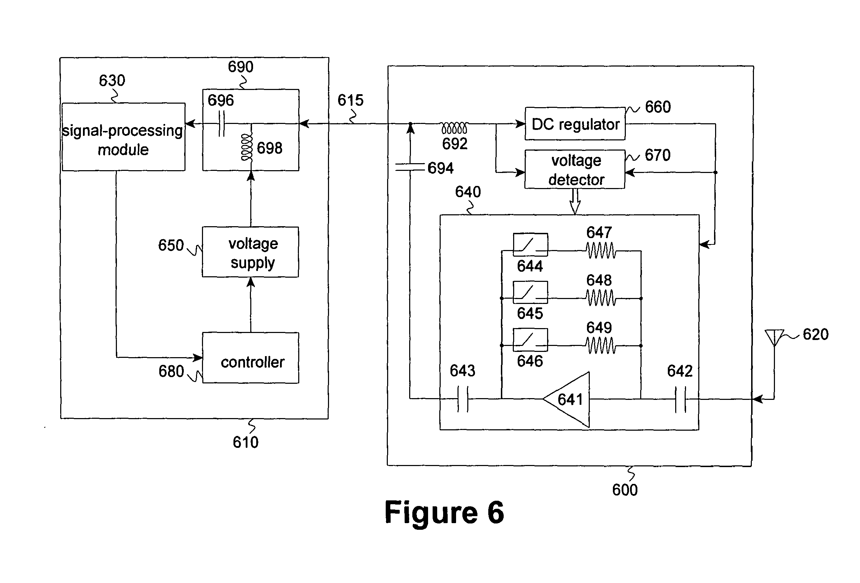

Fig. 6 illustrates a system for receiving wireless signals in accordance with an embodiment of the present invention, including a wireless signal adjusting apparatus 600, an electronic apparatus 610, a single transmission line 615, and an antenna 620. The electronic apparatus 610 includes a signal-processing module 630, a voltage supply 650 and a controller 680, wherein the functions of these elements are same as that in Fig. 5, so the detail description thereof is omitted. The electronic apparatus 610 further includes a T-shaped connector 690 comprised of a capacitor 696 configured to provide an AC path and an inductor 698 configured to provide a DC path.

The wireless signal adjusting apparatus 600 includes a preprocessor 640, a voltage detector 670 and a DC regulator 660, wherein the functions of these elements are same as that in Fig. 5, so the detail description thereof is omitted. The wireless signal adjusting apparatus 600 further includes an inductor 692 configured to provide a path for DC signals and a capacitor 694 configured to provide a path for AC signals. It should be noted that the inductor 692 can also be other well-known low-pass filter architecture only allowing the signals with frequencies below a cutoff frequency to pass, and the capacitor 694 can also be other well-known high-pass filter architecture only allowing the signals with frequencies above a cutoff frequency to pass.

The preprocessor 640 includes a low noise amplifier 641 configured to amplify strength of the wireless signals received by the antenna 620. Resistors 647, 648, 649 and their corresponding switches 644, 645 and 646 are connected between the output terminal and the input terminal of the low noise amplifier 641 to form a feedback loop for adjusting amplification ratio of the wireless signals, wherein the more the equivalent resistance formed by these resistors is, the more amplification ratio of the wireless signal is. The states of switches 644, 645 and 646 are controlled by the control signals from the voltage detector 670, i.e. amplification ratio of the wireless signals received by the antenna 620 is controlled by the control signals generated from the voltage detector 670. For example, the switches can be gate-controlled transistors or other well-known switches. The preprocessor 640 can further includes two capacitors 642 and 643 located in the input and output terminals of the low noise amplifier 641 respectively for filtering the undesired portions of the signals, such as noises. The capacitors 642 and 643 can be replaced with other well-known high pass filters. The preprocessor 640 outputs a data signal to the signal-processing module 630 under the control of the control signal outputted from the voltage detector 670. If strength of the data signal is undesirable, the signal-processing module 630 can change the voltage level outputted from the voltage supply 650 via the controller 680, such that the voltage detector 670 can generate a different control signal to adjust amplification ratio of the wireless signals.

As illustrated in Fig. 6, amplification ratio of the wireless signals is changed by connecting feedback resistors with different resistances to the input and output terminals of the low noise amplifier 641, which is a preferred scheme of the present invention only and is not intended to limit the scope of the present invention. Those skilled in the art will understand and appreciate other feedback architectures and/or other external circuits or resistors that could be utilized to adjust amplification ration of signals in accordance with an aspect of the present invention.

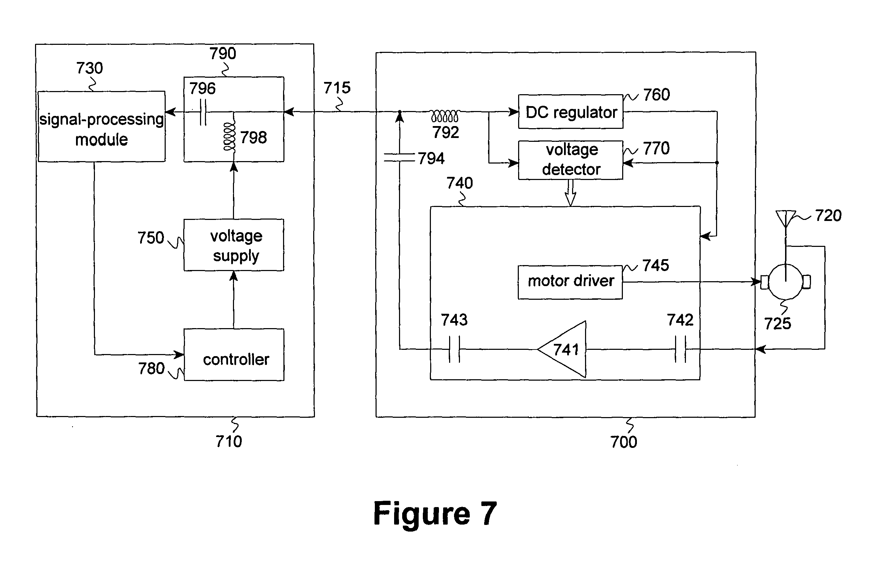

Fig. 7 illustrates a system for receiving wireless signals in accordance with an embodiment of the present invention, including a wireless signal adjusting apparatus 700, an electronic apparatus 710, a single transmission line 715, and an antenna 720 disposed on a motor 725. The electronic apparatus 710 includes a signal-processing module 730, a voltage supply 750, a controller 780 and a T-shape connector 790 comprised of a capacitor 796 and an inductor 798, wherein the functions of these elements are same as that in Fig. 6, so the detail description thereof is omitted. The wireless signal adjusting apparatus 700 includes a preprocessor 740, a voltage detector 770, a DC regulator 760, an inductor 792 and a capacitor 794, wherein the functions of the voltage detector 770, the DC regulator 760, the inductor 792 and the capacitor 794 are same as that in Fig. 6, so the detail description thereof is omitted.

Since the wireless signals experience various optical phenomena (such reflection, diffraction, etc.) during the transmission process in the air, the signals received by the antenna from different paths have different strength, phases and noises. As illustrated in Fig.7, the motor 725 can adjusts the direction of the antenna 720 to seek signals with better quality by receiving signals from various directions.

The preprocessor 740 includes a low noise amplifier 741, and capacitors 742 and 743, wherein the functions of these elements are same as that in Fig. 6, so the detail description thereof is omitted. The preprocessor 740 further includes a motor driver 745 configured to drive the motor 725, and further adjust the direction of the antenna 720. The motor driver 745 is controlled by the control signal from the voltage detector 770, i.e. the direction of the antenna 720 is controlled by the control signal generated by the voltage detector 770. Under the control of the control signal outputted from the voltage detector 770, the preprocessor 740 outputs a data signal to the signal-processing module 730. If quality of the data signal is undesirable, the signal-processing module 730 can change the voltage level outputted from the voltage supply 750 via the controller 780, such that the voltage detector 770 can generate a different control signal to adjust the direction of the antenna 720 for seeking a more desirable wireless signal.

The preprocessors in Figs. 6-7 are used to illustrate the preferred embodiments of the present invention only, and are not meant to limit the scope of the invention. One feature of the present invention is to generate a control signal by controlling the voltage level outputted from a voltage supply for adjusting the wireless signals received by an antenna. The control signal generated from the voltage supply can be implemented in various applications. As a result, there are many applications within the spirit and the scope of the present invention. For example, the control signal of the present invention can control not only amplification ratio of the signals received by the antenna and the direction of the antenna, but the angle between the antenna and a satellite for seeking satellite signal with better quality. For further example, in a system with multiple antennas, the control signal of the present invention can choose one antenna according to the quality of the received signals.

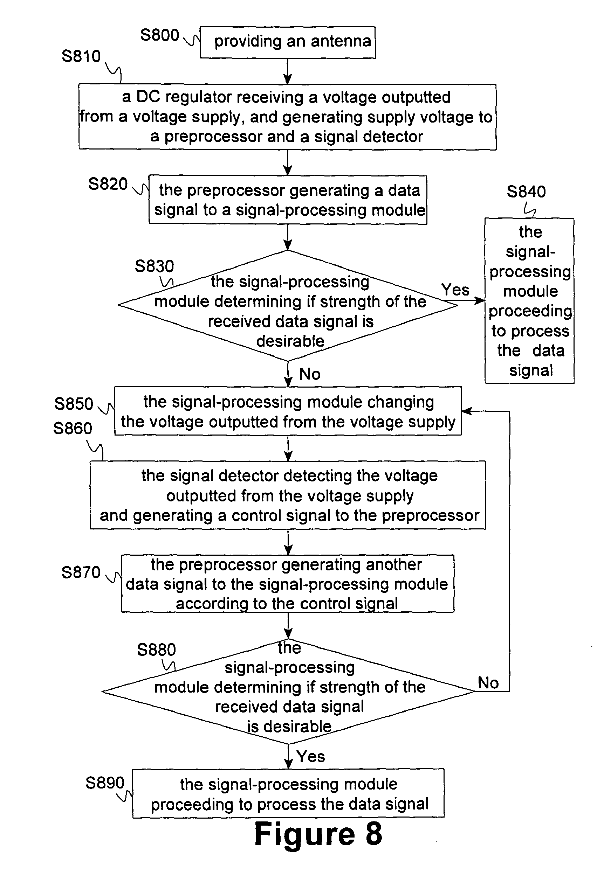

Fig. 8 illustrates a method for receiving wireless signals in accordance with an embodiment of the present invention. In step S800, an antenna is provided to receive wireless signals. In step S810, a DC regulator receives a voltage outputted from a voltage supply, and generates a voltage of a fixed level to a preprocessor. The DC regulator can also generate a voltage of another fixed level to a signal detector configured to detect the voltage level outputted from the voltage supply. In step S820, the preprocessor generates a data signal to a signal-processing module by adjusting strength of the received wireless signals. In step S830, the signal-processing module determines if strength of the received data signal is desirable. If yes, step S840 is executed that the signal-processing module proceeds to process the data signal. If strength of the received data signal is undesirable, step S850 is executed that the signal-processing module changes the voltage level outputted from the voltage supply. In step S860, the signal detector generates a control signal to the preprocessor according to the detected voltage level outputted from the voltage supply. In step S870, the preprocessor adjusts strength of the wireless signals received by the antennas under the control of the control signal, and generates another data signal to the signal-processing module. Then, in step S880, the signal-processing module determines if strength of the received data signal is desirable. If yes, the step S890 is executed that the signal-processing module proceeds to process the data signal. If strength of the received data signal is still undesirable, the procedure is back to step S850 that the signal-processing module changes the voltage level outputted from the voltage supply again, and the steps S850 to S880 are repeated until desirable strength of the data signal is obtained. The method of the present invention can generate the supply voltage required by the preprocessor and control signal configured to control the preprocessor without additional wires or pins.

Although the specific embodiments of the present invention have been illustrated and described, it is to be understood that the invention is not limited to those embodiments. One skilled in the art may make various modifications without departing from the scope or spirit of the invention.

## Claims

1. A system for receiving wireless signals, comprising:
an antenna configured to receive the wireless signals;
a preprocessor connected to the antenna;
a voltage supply configured to output distinctive DC voltage levels;
a connector configured to provide a DC path and an AC path;
a signal-processing module AC-coupled to the preprocessor via the connector;
a DC regulator DC-coupled to the voltage supply via the connector, the DC regulator configured to receive DC voltages outputted from the voltage supply and provide a first supply voltage to the preprocessor; and
a signal detector DC-coupled to the voltage supply via the connector, the signal detector configured to detect the DC voltages outputted from the voltage supply and generate a control signal to the preprocessor;
wherein the preprocessor selectively adjusts strength of the wireless signals received by the antenna by means of the control signal, and then outputs a data signal, the data signal being transmitted to the signal-processing module via the connector.

2. The system of claim 1, wherein said signal-processing module selectively changes the DC voltage levels outputted from the voltage supply according to the data signal.

3. The system of claim 1, wherein the preprocessor comprises a low noise amplifier configured to amplify the wireless signals received by the antenna, wherein the control signal controls amplification ratio of the wireless signals.

4. The system of claim 3, further comprising a motor configured to change orientation of the antenna, and the preprocessor further comprising a motor driver configured to drive the motor, wherein the control signal controls orientation of the antenna by controlling the motor driver.

5. The system of claim 1, wherein the connector is a connector port with a first, a second and a third terminals, wherein the DC path is provided between the first and the second terminals, and the AC path is provided between the first and the third terminals.

6. The system of claim 1, wherein the DC regulator further provides a second supply voltage to the signal detector.

7. The system of claim 1, wherein the DC regulator and the signal detector are coupled to the connector via a low-pass filter, and the preprocessor is coupled to the connector via a high-pass filter.

8. The system of claim 1, wherein the signal-processing module is a digital TV tuner, a Global Positioning System (GPS) receiving circuit or a satellite broadcasting receiving circuit.

9. A wireless signal adjusting apparatus for adjusting strength of wireless signals received by an antenna, the wireless signal adjusting apparatus being connected to an electronic apparatus via a single transmission line, the wireless signal adjusting apparatus comprising:
a preprocessor configured to selectively adjust strength of the wireless signals received by the antenna for outputting a data signal, the data signal being transmitted to the electronic apparatus via the signal transmission line; and
a signal detector configured to receive a first control signal outputted from the electronic apparatus and generate a second control signal responsive to the first control signal, the second control signal being transmitted to the preprocessor,
wherein the electronic apparatus outputs the first control signal according to the data signal;
wherein the preprocessor selectively adjusts strength of the wireless signals received by the antenna by means of the second control signal.

10. The wireless signal adjusting apparatus of claim 9, further comprising a DC regulator configured to provide a first supply voltage to the preprocessor and a second supply voltage to the voltage detector.

11. The wireless signal adjusting apparatus of claim 9, wherein the preprocessor comprises a low noise amplifier configured to amplify the wireless signals received by the antenna, wherein the second control signal controls amplification ratio of the wireless signals.

12. The wireless signal adjusting apparatus of claim 9, wherein the antenna is disposed on a motor and the preprocessor comprises a motor driver configured to drive the motor, wherein the second control signal controls orientation of the antenna by controlling the motor driver.

13. The wireless signal adjusting apparatus of claim 9, wherein the electronic apparatus further comprises:
a connector configured to provide a DC path and an AC path, the DC path and the AC path being connected to the single transmission line;
a voltage supply connected to the connector and configured to output distinctive DC voltage levels; and
a signal-processing module connected to the connector and configured to change the DC voltage levels outputted from the voltage supply according to the data signal.

14. The wireless signal adjusting apparatus of claim 13, wherein the first control signal is generated according to the DC voltage levels outputted from the voltage supply.

15. The wireless signal adjusting apparatus of claim 11, wherein the DC regulator and the signal detector are coupled to the single transmission line via a low-pass filter, and the preprocessor is coupled to the single transmission line via a high-pass filter.

16. The wireless signal adjusting apparatus of claim 9, wherein the signal-processing module is a digital TV tuner, a Global Positioning System (GPS) receiving circuit or a satellite broadcasting receiving circuit.

17. A method for receiving wireless signals, comprising the steps of:
providing an antenna;
a voltage supply outputting a DC voltage of a level to a DC regulator;
the DC regulator generating a first supply voltage to a processor;
the preprocessor receiving and processing the wireless signals received by the antenna for generating a data signal, the data signal being transmitted to a signal-processing module;
the signal-processing module selectively changing the DC voltage levels outputted from the voltage supply according to the data signal; and
a signal detector generating a control signal to the preprocessor by detecting the DC voltage levels outputted from the voltage supply, wherein the data signal enables the preprocessor to selectively adjust strength of the wireless signals received by the antenna.

18. The method of claim 17, wherein the signal-processing module controls DC voltage levels outputted from the voltage supply via a controller.

19. The method of claim 17, wherein the preprocessor processes the wireless signals received by the antenna by means of a low noise amplifier and controls amplification ratio of the wireless signals by means of the control signal.

20. The method of claim 17, wherein the antenna is disposed on a motor and the preprocessor comprises a motor driver configured to drive the motor, wherein the control signal controls orientation of the antenna by controlling the motor driver for adjusting strength of the wireless signals received by the antenna.

21. The method of claim 17, wherein the DC regulator further provides a second supply voltage to the signal detector.

22. The method of claim 17, wherein the signal-processing module is a digital TV tuner, a Global Positioning System (GPS) receiving circuit or a satellite broadcasting receiving circuit.

## Amended claims

### Amended claims in accordance with Rule 86(2) EPC.

**1.** A system for receiving wireless signals, comprising:
an antenna (520, 620, 720) configured to receive the wireless signals;
a preprocessor (540, 640, 740) connected to the antenna (520, 620, 720);
a voltage supply (550, 650, 750);
a connector (590, 690, 790) configured to provide a DC path and an AC path;
a signal-processing module (530, 630, 730) AC-coupled to the preprocessor (540, 640, 740) via the connector (590, 690, 790);
a DC regulator (560, 660, 760) DC-coupled to the voltage supply (550, 650, 750) via the connector (590, 690, 790), the DC regulator (560, 660, 760) configured to receive DC voltages outputted from the voltage supply (550, 650, 750) and provide a first supply voltage to the preprocessor (540, 640, 740); and
a signal detector (570, 670, 770) DC-coupled to the voltage supply (550, 650, 750) via the connector (590, 690, 790), the signal detector configured to the detect the DC voltages outputted from the voltage supply (590, 690, 790) and generate a control signal to the preprocessor (540, 640, 740);
wherein the preprocessor (540, 640, 740) selectively adjusts strength of the wireless signals received by the antenna (520, 620, 720) by means of the control signal, and then outputs a data signal, the data signal being transmitted to the signal-processing module (530, 630, 730) via the connector (590, 690, 790);
**characterized in that** the voltage supply (550, 650, 750) is controllable such that it selectively outputs distinctive voltage levels and **in that** the connector (590, 690, 790) is a connector port (590, 690, 790) comprising splitting means (696, 796, 698, 798) for splitting the DC path and the AC path.

**2.** The systems of claim 1, **characterized in that** said signal-processing module (530, 630, 730) selectively changes the DC voltage levels outputted from the voltage supply (590, 690, 790) according to the data signal.

**3.** The systems of claim 1, **characterized in that** the preprocessor (540, 640, 740) comprises a low noise amplifier (641, 741) configured to amplify the wireless signals received by the antenna (520, 620, 720), wherein the control signal controls amplification ratio of the wireless signals.

**4.** The system of claim 3, **characterized in that** it further comprises a motor (725) configured to change orientation of the antenna (520, 620, 720), and **in that** the preprocessor (540, 640, 740) further comprises a motor driver (745) configured to drive the motor (725), wherein the control signal controls orientation of the antenna (520, 620, 720) by controlling the motor driver (745).

**5.** The system of claim 1, **characterized in that** the connector port (590, 690, 790) comprises a first, a second and a third terminals, wherein the DC path is provided between the first and the second terminals, and the AC path is provided between the first and the third terminals.

**6.** The system of claim 1, **characterized in that** the DC regulator (560, 660, 760) further provides a second supply voltage to the signal detector (570, 670, 770).

**7.** The system of claim 1, **characterized in that** the DC regulator (560, 660, 760) and the signal detector (570, 670, 770) are coupled to the connector via a low-pass filter, and the preprocessor (540, 640, 740) is coupled to the connector (590, 690, 790) via a high-pass filter (594, 694, 794).

**8.** The system of claim 1, **characterized in that** the signal-processing module (530, 630, 730) is a digital TV tuner, a Global Positioning System (GPS) receiving circuit or a satellite broadcasting receiving circuit.

**9.** A wireless signal adjusting apparatus (500, 600, 700) for adjusting strength of wireless signals received by an antenna (520, 620, 720), the wireless signal adjusting apparatus (500, 600, 700) being connected to an electronic apparatus (510, 610, 710) via a single transmission line (515, 615, 715), the wireless signal adjusting apparatus (500, 600, 700) comprising:
a preprocessor (540, 640, 740) configured to selectively adjust strength of the wireless signals received by the antenna (520, 620, 720) for outputting a data signal, the data signal being transmitted to the electronic apparatus (510, 610, 710) via the signal transmission line (515, 615, 715); and
a signal detector (570, 670, 770) configured to receive a first control signal outputted from the electronic apparatus (510, 610, 710) and generate a second control signal responsive to the first control signal, the second control signal being transmitted to the preprocessor (540, 640, 740), wherein the electronic apparatus (510, 610, 710) outputs the first control signal according to the data signal;
wherein the preprocessor (540, 640, 740) selectively adjusts strength of the wireless signals received by the antenna by means of the second control signal;
**characterized in that** the electronic apparatus (510, 610, 710) comprises a controllable voltage supply (550, 650, 750) that selectively outputs distinctive voltage levels and a connector port (590, 690, 790) configured to provide a DC path and an AC path wherein the connector port (590, 690, 790) comprises splitting means (696, 796, 698, 798) for splitting a DC path and an AC path being connected to the single transmission line (515, 615, 715).

**10.** The wireless signal adjusting apparatus (500, 600, 700) of claim 9, **characterized in that** it further comprises a DC regulator (590, 690, 790) configured to provide a first supply voltage to the preprocessor (540, 640, 740) and a second supply voltage to the voltage detector (570, 670, 770).

**11.** The wireless signal adjusting apparatus (500, 600, 700) of claim 9, **characterized in that** the preprocessor (540, 640, 740) comprises a low noise amplifier (641, 741) configured to amplify the wireless signals received by the antenna (520, 620, 720), wherein the second control signal controls amplification ratio of the wireless signals.

**12.** The wireless.signal adjusting apparatus (500, 600, 700) of claim 9, **characterized in that** the antenna (520, 620, 720) is disposed on a motor (725) and the preprocessor (540, 640, 740) comprises a motor driver (745) configured to drive the motor (725), wherein the second control signal controls orientation of the antenna (520, 620, 720) by controlling the motor driver (745).

**13.** The wireless signal adjusting apparatus (500, 600, 700) of claim 9, **characterized in that** the electronic apparatus (510, 610, 710) further comprises a signal-processing module (530, 630, 730) connected to the connector (590, 690, 790) and configured to change the DC voltage levels outputted from the voltage supply (550, 650, 750) according to the data signal.

**14.** The wireless signal adjusting apparatus (500, 600, 700) of claim 13, **characterized in that** the first control signal is generated according to the DC voltage levels outputted from the voltage supply (550, 650, 750).

**15.** The wireless signal adjusting apparatus (500, 600, 700) of claim 11, **characterized in that** the DC regulator (560, 660, 760) and the signal detector (570, 670, 770) are coupled to the single transmission line (615, 615, 715) via a low-pass filter (592, 692, 792), and the preprocessor (540, 640, 740) is coupled to the single transmission line (515, 615, 715) via a high-pass filter (594, 694, 794).

**16.** The wireless signal adjusting apparatus (500, 600, 700) of claim 9, **characterized in that** the signal-processing module (530, 630, 730) is a digital TV tuner, a Global Processing System (GPS) receiving circuit or a satellite broadcasting receiving circuit.

**17.** A method for receiving wireless signals, comprising the steps of:
providing an antenna (520, 620, 720);
a voltage supply (550, 650, 750) outputting a DC voltage of a level to a DC regulator;
the DC regulator (560, 660, 760) generating a first supply voltage to a processor;
the preprocessor (540, 640, 740) receiving and processing the wireless signals received by the antenna (520, 620, 720) for generating a data signal, the data signal being transmitted to a signal-processing module (530, 630, 730);
the signal-processing module (530, 630, 730) selectively changing the DC voltage levels outputted from the voltage supply (550, 650, 750) according to the data signal; and
a signal detector (570, 670, 770) generating a control signal to the preprocessor (540, 640, 740) by detecting the DC voltage levels outputted from the voltage supply (550, 650, 750), wherein the data signal enables the preprocessor (540, 640, 740) to selectively adjust strength of the wireless signals received by the antenna (520, 620, 720);
**characterized in that** the voltage supply (550, 650, 750) is controlled such that it selectively outputs distinctive voltage levels and **in that** the data signal and the voltage levels are combined and connected to a single transmission line (515, 615, 715) by means of a connector port (590, 690, 790).

**18.** The method of claim 17, **characterized in that** the signal-processing module (530, 630, 730) controls DC voltage levels outputted from the voltage supply (550, 650, 750) via a controller (580, 680, 780).

**19.** The method of claim 17, **characterized in that** the preprocessor (540, 640, 740) processes the wireless signals received by the antenna (520, 620, 720) by means of a low noise amplifier (641, 741) and controls amplification ratio of the wireless signals by means of the control signal.

**20.** The method of claim 17, **characterized in that** the antenna (520, 620, 720) is disposed on a motor (725) and the preprocessor (540, 640, 740) comprises a motor driver (745) configured to drive the motor (725), wherein the control signal controls orientation of the antenna (520, 620, 720) by controlling the motor driver (745) for adjusting strength of the wireless signals received by the antenna (520, 620, 720).

**21.** The method of claim 17, **characterized in that** the DC regulator (560, 660, 760) further provides a second supply voltage to the signal detector (570, 670, 770).

**22.** The method of claim 17, **characterized in that** the signal-processing module (530, 630, 730) is a digital TV tuner, a Global Positioning System (GPS) receiving circuit or a satellite broadcasting receiving circuit.
